# EUROPÄISCHE PATENTSCHRIFT

(11) **EP 4 235 001 B1**
(45) Veröffentlichungstag und Bekanntmachung des Hinweises auf die Patenterteilung: **16.10.2024**
(21) Anmeldenummer: 22158908.8
(22) Anmeldetag: 25.02.2022
(51) Int. Cl.: F16L 11/15, F16L 11/20, F16L 39/02, F16L 59/065, F16L 59/14, F16L 59/18, F16L 27/10, F16L 51/04

(54) **THERMISCH ISOLIERTE TRANSFERLEITUNG MIT KUPPELELEMENT**
THERMALLY INSULATED TRANSFER LINE WITH COUPLING ELEMENT
CONDUIT DE TRANSFERT THERMIQUEMENT ISOLÉ POURVU D'ÉLÉMENT D'ACCOUPLEMENT

(43) Veröffentlichungstag der Anmeldung: 30.08.2023
(73) Patentinhaber: MAGNA Energy Storage Systems GesmbH, 8261 Sinabelkirchen (AT)
(72) Erfinder: KOTNIG, Claudio, 8302 Nestelbach (AT); PUCHLEITNER, Rainer, 8052 Graz (AT)
(74) Vertreter: Zangger, Bernd

(56) Entgegenhaltungen:
- US-A- 2 838 074
- US-A- 3 152 452
- US-A1- 2013 241 197
- US-B2- 9 163 772

## Beschreibung

### Gebiet der Erfindung

Die vorliegende Erfindung betrifft eine thermisch isolierte Transferleitung für ein tiefkaltes Fluid, insbesondere eine Transferleitung mit einem Kuppelelement zum Anschluss an einen kryogenen Tank.

### Stand der Technik

Kryogene Tanks zum Speichern von tiefkalten Fluiden, insbesondere zum Speichern von Wasserstoff, sind bekannt. Kryogene Tanks können auch mobil eingesetzt werden, beispielsweise zum Transport von Kraftstoff in Fahrzeugen und Flugzeugen.

Um das gespeicherte Medium eines kryogenen Tanks beispielsweise in einen anderen kryogenen Tank zu transferieren, können Transferleitungen verwendet werden, die aus zwei konzentrischen Leitungsrohren mit einem Vakuum zwischen den Leitungsrohren bestehen können. Derartige Transferleitungen werden üblicherweise für statische Anwendungen genutzt und sind nicht für die Aufnahme dynamischer Lasten geeignet.

Zur Kupplung einer solchen Transferleitung an beispielsweise einen kryogenen Tank ist es bekannt, ein Kuppelelement an zumindest einem Ende der Transferleitung auszubilden. Durch das Kuppelelement kann die Prozessleitung der Transferleitung an einer Tankprozessleitung des kryogenen Tanks befestigt werden, so dass eine fluidleitende Verbindung zwischen der Prozessleitung und der Tankprozessleitung hergestellt wird.

Allerdings weisen solche Kuppelelemente üblicherweise einen hohen Platzbedarf auf, vor allem um eine geforderte thermische Isolierung der Prozessleitung auch im Bereich der Kupplung sicher zu stellen.

Aus der US 2 838 074 A ist eine Fluiddruck-Verbindungsanordnung bekannt mit einer Einrichtung, die eine erste Leitung und eine zweite Leitung definiert, wobei die erste Leitung innerhalb der zweiten Leitung angeordnet ist, wobei die erste Leitung dadurch einen inneren Fluiddruckdurchgang bereitstellt und ihr äußerer Umfang mit der zweiten Leitung zusammenwirkt, um einen äußeren Fluiddruckdurchgang bereitzustellen, und einer Einrichtung, die Kupplungen definiert, die den inneren Durchgang und den äußeren Durchgang mit Fluiddruckquellen verbinden, wobei die Einrichtung, die Kupplungen definiert, innere Elemente zum Übertragen von Fluiddruck zu und von dem inneren Durchgang umfasst und eine Einrichtung zum Übertragen von Fluid zu und von dem äußeren Durchgang enthält, ringähnliche Mittel zum abdichtenden Verbinden der inneren Leitung mit den inneren Gliedern und zum Zusammenwirken mit den Mitteln zum Übertragen von Fluiddruck zu und von dem äußeren Fluiddruckdurchgang, um Fluiddruck durch diesen hindurch zu übertragen, und äußere Glieder, die mit den inneren Gliedern, den ringähnlichen Mitteln und den inneren und äußeren Leitungen zusammenwirken, um die äußere Leitung abdichtend mit den inneren Gliedern und den ringähnlichen Mitteln zu verbinden und dadurch eine einheitliche Fluiddruck-Verbindungsbaugruppe zu bilden, wobei die äußeren Glieder ferner mit Mitteln versehen sind, die mit Fluiddruckquellen verbunden werden.

Die US 2013/241197 offenbart ein Anschlussstück eines flexiblen Rohres für den Transport eines kryogenen Fluids, umfassend ein gewelltes Innenrohr, mindestens eine Zugpanzerschicht, die um das gewellte Rohr herum angeordnet ist, mindestens eine Wärmedämmschicht, die um die Panzerschicht herum angeordnet ist, und eine dichte äußere Umhüllung, die um die Wärmedämmschicht herum angeordnet ist, wobei das Endstück einen vorderen Teil, der einen vorderen Endflansch zum Festhalten des gewellten Rohrs und Elemente zum Befestigen der Panzerschicht umfasst, und einen hinteren Teil, der mindestens einen hinteren Endflansch zum Quetschen der dichten äußeren Umhüllung und zum Festhalten der Wärmedämmschicht umfasst, aufweist, wobei die vorderen Endflansche und die hinteren Endflansche jeweils durch Verbindungselemente miteinander verbunden sind, wobei zwischen den vorderen Endflanschen und den hinteren Endflanschen jeweils Wärmeisolierungsmittel angeordnet sind, um den hinteren Teil vom vorderen Teil des Verbindungsendstücks zu isolieren.

Aus der US 9 163 772 B2 ist ein Flüssigkeitsübertragungsschlauch bekannt, umfassend eine Flüssigkeitsübertragungsleitung, die in einem Anschlussstück endet; einen Außenmantel, der sich über die Fluidtransferleitung erstreckt; eine Schnittstellenmanschette, die an einem Ende des Außenmantels angebracht ist; einen Faltenbalg, der an einem ersten Ende mit der Übergangsmanschette und an einem zweiten Ende mit einer Durchgangsmanschette verbunden ist; eine Gleitmanschette, die an der Durchgangsmanschette angebracht ist und sich über einen Teil des Balgs und der Durchgangsmanschette erstrecken kann; und eine Verbindungsmutter, die mit dem Durchgangskragen gekoppelt ist, wobei die Verbindungsmutter so ausgelegt ist, dass sie abnehmbar mit einer Anschlussöffnung einer fluidhaltenden Struktur verbunden werden kann; wobei die Gleitmanschette relativ zu dem Schnittstellenbund zwischen einer eingezogenen Position und einer ausgefahrenen Position axial verschiebbar ist; und wobei in der zurückgezogenen Position die Verbindungsmutter, der Durchgangskragen und der Faltenbalg zurückgezogen sind, um Zugang zu dem Anschlussstück zu ermöglichen.

Dokument US 3 152 452 A lehrt eine vakuumisolierte Ventilkupplung zur Übertragung von niedrig siedenden verflüssigten Gasen, die in Kombination ein erstes und ein zweites zusammengefügtes Element umfasst, die eng miteinander verbunden sind, wobei das zweite Element innerhalb des ersten Elements liegt, wenn die Kupplung angeschlossen ist; wobei das erste zusammengefügte Element einen dünnwandigen Innenmantel zur Aufnahme des zweiten zusammengefügten Elements, eine erste Flüssiggasleitung und eine erste Ventilführungseinheit, die eine solche Leitung einstückig mit einem Ende des Innenmantels verbindet, einen dünnwandigen Außenmantel, der den Innenmantel und die erste Flüssiggasleitung umschließt, wodurch ein erster evakuierbarer Isolierraum gebildet wird, und ein ringförmiges Verbindungsstück, das ein Ende eines solchen Isolierraums durch einstückiges Verbinden eines Endes des Außenmantels mit dem Ende des Innenmantels gegenüber der Verbindung von Leitung und Innenmantel umschließt, umfasst.

### Zusammenfassung der Erfindung

Es ist eine Aufgabe der Erfindung, thermisch isolierte Transferleitungen der genannten Art in dieser Hinsicht zu verbessern und insbesondere eine thermisch isolierte Transferleitung anzugeben, die eine gute thermische Isolierung im Bereich einer Kupplung, bei geringem Platzbedarf der Kupplung, ermöglicht.

Die Lösung der Aufgabe erfolgt durch eine thermisch isolierte Transferleitung für ein tiefkaltes Fluid mit den Merkmalen gemäß Anspruch 1.

Die Transferleitung umfasst eine Prozessleitung zur Führung des Fluids, eine radial außerhalb der Prozessleitung liegende, entlang der Längsrichtung der Prozessleitung verlaufende Isolationshülle, wobei zwischen der Prozessleitung und der Isolationshülle ein Isolationsraum, beispielsweise ein Vakuumraum, eingerichtet ist, wobei ein Kuppelelement zur Anbindung der Transferleitung an einen kryogenen Tank an zumindest einem Ende der Transferleitung ausgebildet ist, bevorzugt an beiden Enden, wobei das Kuppelelement dazu eingerichtet ist, dass die Prozessleitung der Transferleitung an einer Tankprozessleitung des kryogenen Tanks befestigt wird, so dass eine fluidleitende Verbindung zwischen der Prozessleitung und der Tankprozessleitung hergestellt wird, wobei das Kuppelelement ein Endstück umfasst, wobei die Isolationshülle der Transferleitung in das Endstück übergeht, wobei das Kuppelelement eine Anschlusshülse umfasst, wobei die Anschlusshülse konzentrisch radial außen am Endstück angeordnet ist und am Endstück befestigt ist, nämlich verschweißt, wobei eine Schiebemuffe dazu eingerichtet ist, die Anschlusshülse mit dem kryogenen Tank zu verbinden.

Erfindungsgemäß wird ein Kuppelelement verwendet, dass eine Anschlusshülse umfasst, die radial außerhalb eines Endstückes einer Isolationshülle der Transferleitung angeordnet ist. Die Isolationshülle der Transferleitung geht in das Endstück über, beispielsweise in dem die Isolationshülle an dem Endstück befestigt ist. Das Endstück bildet somit gewissermaßen eine Verlängerung der Isolationshülle und begrenzt somit, wie auch die Isolationshülle, den Isolationsraum. Das Endstück weist bevorzugt im Wesentlichen eine Zylindermantelform, also Hülsenform auf. Die Anschlusshülse weist bevorzugt ebenfalls im Wesentlichen eine Zylindermantelform, also Hülsenform auf und ist konzentrisch radial außerhalb des Endstücks angeordnet, so dass sich Anschlusshülse und Endstück in einem Überlappungsbereich axial überlappen. Die Anschlusshülse ist am Endstück befestigt. Bevorzugt ist aber im allgemeinen, über große Flächen und besonders bevorzugt überall dort, wo die Anschlusshülse nicht am Endstück befestigt ist, zwischen Endstück und Anschlusshülse ein radialer Abstand vorgesehen. Erst diese Anschlusshülse ist über eine Schiebemuffe mit dem kryogenen Tank verbunden bzw. an diesem befestigt, nicht das Endstück selbst. Hierdurch wird ein Wärmeübertragungspfad von der Prozessleitung nach außen und zum Tank hin verlängert und somit der thermische Widerstand erhöht. Durch die konzentrische Anordnung von Endstück und Anschlusshülse ist trotz langem Wärmeübertragungspfad ein geringer Platzbedarf für das Kuppelelement erforderlich.

Erfindungsgemäß ist das Endstück in einem axialen Abschnitt, in dem das Endstück von der Anschlusshülse umgeben ist, zumindest abschnittsweise durch einen Faltenbalg gebildet. Durch einen solchen Faltenbalg kann der thermische Widerstand trotz kompakter Bauweise weiter erhöht werden. Zudem wird hierdurch ein Ausgleich von Bauteiltoleranzen ermöglicht und kann auch die Anpresskraft der Prozessleitung an einer Tankprozessleitung des zu kuppelnden Bauteils erhöht werden.

Erfindungsgemäß ist die Anschlusshülse mit dem Endstück über eine Schweißstelle der Anschlusshülse, auch Schweißstelle-Anschlusshülse genannt, verschweißt, wobei die Schweißstelle-Anschlusshülse in der Nähe des der Isolationshülle zugewandten Endes der Anschlusshülse ausgebildet ist, also an dem vom zu koppelnden Tank abgewandten axialen Ende der Anschlusshülse.

Die Schweißstelle-Anschlusshülse, also die Schweißstelle Anschlusshülse und Endstück, ist erfindungsgemäß axial zwischen dem Faltenbalg und der Isolationshülle am Endstück ausgebildet.

Bevorzugt umfasst das Kuppelelement eine Endhülse, die mit der Prozessleitung fluidverbunden ist, wobei das Kuppelelement mittels Endhülse dazu eingerichtet ist, dass die Prozessleitung der Transferleitung an einer Tankprozessleitung des kryogenen Tanks befestigt wird, so dass eine fluidleitende Verbindung zwischen der Prozessleitung und der Tankprozessleitung hergestellt wird.

Das Kuppelelement umfasst bevorzugt eine Überwurfmutter, die dazu eingerichtet ist, dass die Prozessleitung der Transferleitung an einer Tankprozessleitung befestigt wird, so dass eine fluidleitende Verbindung zwischen der Prozessleitung und der Tankprozessleitung hergestellt wird. Die Überwurfmutter befestigt bevorzugt die Endhülse der Prozessleitung an der Tankprozessleitung.

Das Endstück ist bevorzugt nicht als Wellrohr oder Wellschlauch ausgebildet, sondern mechanisch fest ausgebildet.

Die Schiebemuffe ist bevorzugt konzentrisch radial außen am Endstück und an der Anschlusshülse angeordnet und gegenüber dem Endstück und der Anschlusshülse axial verschiebbar.

Besonders bevorzugt liegt die Schiebemuffe radial außerhalb der Anschlusshülse, in einem Bereich in dem radial innerhalb der Anschlusshülse auch das Endstück der Isolationshülle und wiederum radial innerhalb der Isolationshülle die Prozessleitung verläuft. Die Schiebemuffe ist axial gegenüber der Anschlusshülse verschiebbar. Die Schiebemuffe weist bevorzugt an ihrem der Isolationshülle abgewandten axialen Ende eine Flanschfläche auf, zur Befestigung an einem Anschlussflansch der an dem zu koppelnden Bauteil, insbesondere dem Tank, ausgebildet ist.

Vorzugsweise ist eine Mutter konzentrisch radial außen an der Anschlusshülse angeordnet und dazu eingerichtet, die Schiebemuffe axial gegen einen Anschlag der Anschlusshülse und/oder axial gegen einen Anschlussflansch des kryogenen Tanks zu drücken. Am Anschlag der Anschlusshülse und/oder an einer Flanschfläche der Schiebemuffe zur Befestigung am Anschlussflansch des kryogenen Tanks ist bevorzugt eine Dichtung vorgesehen, insbesondere eine radial umlaufende Dichtung.

Bevorzugt weist das Endstück einen Vakuumstutzen auf, wobei durch den Vakuumstutzen ein Vakuum im Isolationsraum herstellbar ist oder der Isolationsraum mit einem Inertgas geflutet werden kann.

Bevorzugt weist das Endstück einen Vakuumstutzen-Kupplungsraum auf, wobei durch den Vakuumstutzen-Kupplungsraum ein Vakuum im Kupplungsraum herstellbar ist oder der Kupplungsraum mit einem Inertgas geflutet werden kann.

Bevorzugt ist innerhalb des Endstücks ein Sorptionsmaterial angeordnet, insbesondere Zeolith, Aktivkohle und/oder Getter, zum Beispiel Barium.

Vorzugsweise weisen die Prozessleitung und die Isolationshülle gemeinsam, zumindest abschnittsweise entlang ihrer Erstreckung in Längsrichtung der Transferleitung, eine U-Form oder V-Form oder Mäanderform oder Spiralform auf. Bevorzugt weist eine Transferleitung, genauer gesagt sowohl die das Fluid direkt führende Prozessleitung als auch die, die Prozessleitung umgebende Isolationshülle, entlang deren Längsrichtung eine U-Form oder V-Form oder die Form einer Mäander oder Spirale auf. Dabei bedeutet "U-Form" oder "V-Form", dass zumindest ein, bevorzugt aber mehrere, zumindest zwei, U bzw. V Ausformungen, axial hintereinander vorgesehen sind. Die U, V, Mäander- und Spiralformen können eher rund, also als Biegungen, oder auch eher eckig, als Ecken, ausgebildet sein. Statt eine lineare Verbindung zwischen Anfang und Ende der Prozessleitung und Isolationshülle vorzusehen, sind somit Ausbuchtungen vorgesehen, die wieder zurückgeführt werden müssen. Somit wird eine längere Leitungslänge in Kauf genommen, die zweidimensional ausgebildet ist, beispielsweise eine Mäander oder U- oder V-Formen bildet, oder dreidimensional ausgebildet ist, so dass benachbarte Mäander- oder U- oder V-Formen zueinander verdreht sind und/oder eine Spirale bilden, um axiale Kräfte und/oder Torsionsmomente besser aufnehmen zu können. Dadurch können beispielsweise Relativbewegungen zwischen zwei, durch die Transferleitung verbundenen Tanks besser in der Transferleitung aufgenommen werden, insbesondere Torsionen und/oder Axialbewegungen. Die Transferleitung ist daher bevorzugt vorgeformt, vorzugsweise im Wesentlichen mäanderförmig oder spiralisiert, bzw. bildet eine Feder, insbesondere Zylinderfeder.

Bevorzugt ist die Prozessleitung zumindest abschnittsweise ein Wellrohr oder Wellschlauch und besonders bevorzugt ist auch die Isolationshülle zumindest abschnittsweise ein Wellrohr oder Wellschlauch.

Die Isolationshülle kann auch konzentrisch von weiteren Isolationshüllen umgeben sein, die jeweils wieder als Wellenrohre oder Wellschläuche ausgebildet sein können, so dass jeweils zwischen den Isolationshüllen Isolationsräume, beispielsweise Vakuumräume, eingerichtet sind.

Die Prozessleitung und die Isolationshülle weisen bevorzugt gemeinsam, über im Wesentlichen die gesamte Erstreckung in Längsrichtung der Transferleitung, eine U-Form oder V-Form oder Mäanderform oder Spiralform auf, oder über zumindest 40%, bevorzugt zumindest 60 %, besonders bevorzugt zumindest 80% der Erstreckung in Längsrichtung der Transferleitung. Vorzugsweise weist die gesamte Transferleitung, zumindest Prozessleitung, Isolationshülle und dazwischen angeordneter Isolationsraum, über die gesamte Länge die U-Form oder V-Form oder Mäanderform oder Spiralform auf, ausgenommen Anschluss- oder Koppelbereiche an den Enden der Transferleitung. Dabei bedeutet, wie erwähnt, "U-Form" oder "V-Form", dass bevorzugt mehrere U- bzw. V-Ausformungen axial hintereinander angeordnet, den angegebenen Erstreckungsbereich bilden können.

Bevorzugt sind die Prozessleitung und die Isolationshülle konzentrisch zueinander angeordnet, wobei die Konzentrizität auch entlang derjenigen Abschnitte entlang der Erstreckung der Transferleitung in Längsrichtung besteht, die eine U-Form oder V-Form oder Mäanderform oder Spiralform aufweisen.

Vorzugsweise sind zwischen der Prozessleitung und der Isolationshülle Abstandshalter eingerichtet, um einen Abstand zwischen Prozessleitung und Isolationshülle sicherzustellen, auch entlang derjenigen Abschnitte entlang der Erstreckung der Transferleitung in Längsrichtung, die eine U-Form oder V-Form oder Mäanderform oder Spiralform aufweisen.

Bevorzugt ist im Isolationsraum ein Vakuum und/oder eine Feststoffisolation, und/oder ein Inertgas, zum Beispiel CO₂, und/oder eine thermisch reflektive Schicht, zum Beispiel eine Multilayer Insulation (MLI), eingerichtet. Das Inertgas ist ein Gas, das einen hohen Verfestigungspunkt aufweist, jedenfalls höher als derjenige von Luft und/oder einen Tripelpunkt größer der Kondensationstemperatur von Sauerstoff. Die Feststoffisolation verwendet zumindest einen oder auch mehrere, gemischte oder in Schichten angeordnete, thermisch schlecht leitende Feststoffe. Eine thermisch reflektive Schicht ist eine Schicht, die eine Wärmeleitung durch Strahlung reduziert.

Vorzugsweise ist im Isolationsraum abschnittsweise ein Sorptionsmittel angeordnet, insbesondere Zeolith, Aktivkohle und/oder Getter, zum Beispiel Barium.

Vorzugsweise verläuft eine Schutzhülle entlang der Erstreckung der Isolationshülle radial außerhalb der Isolationshülle, wobei die Schutzhülle bevorzugt keine U-Form oder V-Form oder Mäanderform oder Spiralform aufweist, wobei die Schutzhülle besonders bevorzugt eine Zylindermantelform aufweist, also ebene Wände. Die thermisch isolierte Kryo-Leitung, bevorzugt in Form einer "Zylinderfeder", wird somit mittels eines außenliegenden Schutzrohres bevorzugt zwischen zwei Tanks geführt.

Bevorzugt ist zwischen der Schutzhülle und der Isolationshülle, beispielsweise innen an der Schutzhülle oder außen an der Isolationshülle oder im gesamten Zwischenraum, zumindest abschnittsweise ein Dämpfungsmaterial und/oder ein elastisches Material angeordnet ist. Das Dämpfungsmaterial und/oder elastische Material kann zur Dämpfung von Schwingungen und/oder zur Abstützung der vorgeformten, insbesondere spiralisierten Leitungen und zum Schutz an den Kontaktpunkten der Isolationshülle und der Schutzhülle dienen.

Bevorzugt umfasst die Schutzhülle zumindest zwei axial gegeneinander bewegbare Hüllenteile, wobei die Hüllenteile bevorzugt durch einen Faltenbalg und/oder eine Tülle und/oder eine Hülse miteinander verbunden sind und/oder radial geschachtelt sind, so dass ein Hüllenteil in einem Überlappungsabschnitt radial innerhalb oder außerhalb des anderen Hüllenteils verschiebbar ist. Somit wird ein Längenausgleich für die Schutzhülle ermöglicht.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäßen thermisch isolierten Transferleitung von vorne.
- Fig. 2: ist eine Schnittansicht einer erfindungsgemäßen Transferleitung gemäß Schnitt A-A der Fig. 1 jedoch ohne Darstellung der Kuppelelemente.
- Fig. 3: ist eine Schnittansicht einer erfindungsgemäßen Transferleitung gemäß Schnitt A-A der Fig. 1 mit Kuppelelementen.
- Fig. 4: ist eine Schnittansicht einer erfindungsgemäßen Transferleitung gemäß Schnitt A-A der Fig. 1 mit Kuppelelementen und Schutzhülle.
- Fig. 5: ist eine Schnittansicht an einem Ende einer erfindungsgemäßen Transferleitung, in einem offenen Zustand.
- Fig. 6: ist eine Schnittansicht eines Kuppelelements an einem Ende einer erfindungsgemäßen Transferleitung gemäß Fig. 5, in einem geschlossenen Zustand.
- Fig. 7a: ist eine Schnittansicht eines Kuppelelements gemäß Fig. 5 in einem ersten Prozessschritt beim Schließen des Kuppelelements.
- Fig. 7b: ist eine Schnittansicht eines Kuppelelements gemäß Fig. 5 in einem zweiten Prozessschritt beim Schließen des Kuppelelements.
- Fig. 7c: ist eine Schnittansicht eines Kuppelelements gemäß Fig. 5 in einem dritten Prozessschritt beim Schließen des Kuppelelements.

### Detaillierte Beschreibung der Erfindung

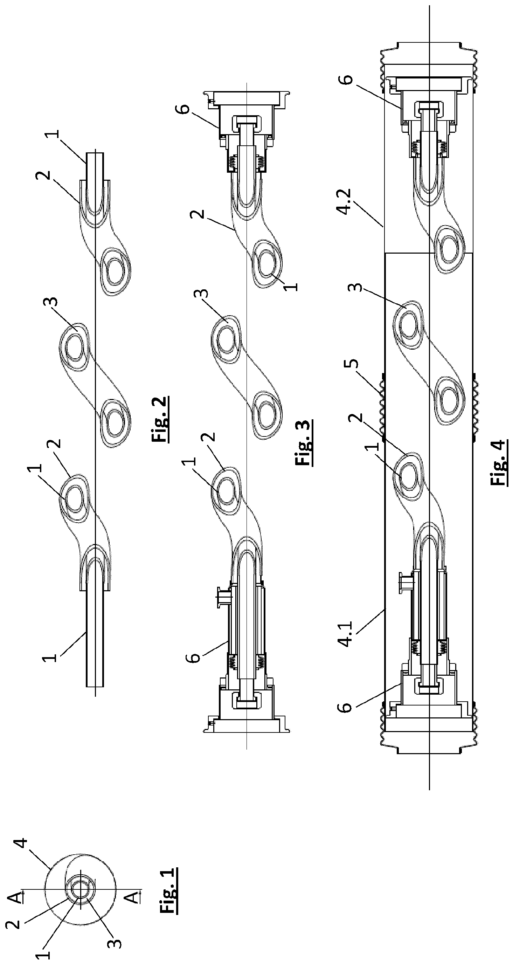

In Fig. 1 ist eine ist eine Schnittansicht einer erfindungsgemäßen thermisch isolierten Transferleitung von vorne dargestellt.

Die Transferleitung umfasst eine radial innen liegende Prozessleitung 1 zur Führung eines Fluids, insbesondere von Wasserstoff, und eine radial außerhalb der Prozessleitung 1 liegende, entlang der Erstreckung der Prozessleitung 1 verlaufende und zur Prozessleitung 1 konzentrische Isolationshülle 2. Zwischen der Prozessleitung 1 und der Isolationshülle 2 ist ein Isolationsraum 3 eingerichtet.

Sowohl die Prozessleitung 1, als auch die Isolationshülle 2 sowie der Isolationsraum 3 weisen in Längsrichtung der Transferleitung eine Spiralform auf, die in Fig. 1 angedeutet ist.

In Fig. 1 ist ferner eine Schutzhülle 4 dargestellt, die radial außerhalb der Isolationshülle 2 angeordnet ist und im Wesentlichen in Längsrichtung der Prozessleitung 1 und der Isolationshülle 2 verläuft. Die Schutzhülle 4 weist keine Spiralform auf, sondern ist eben ausgebildet und weist somit eine Zylindermantelform auf.

Die Fig. 2, 3 und 4 zeigen eine Transferleitung gemäß Fig. 1 von der Seite, entsprechend dem Schnitt A-A in Fig. 1, wobei in Fig. 2 keine Schutzhülle dargestellt ist, in Fig. 3 zusätzlich zur Prozessleitung 1 und der Isolationshülle 2 auch erfindungsgemäße Kuppelelemente 6 an beiden Enden der Transferleitung dargestellt sind und in Fig. 4 auch eine Schutzhülle 4, wie in Fig. 1, über die gesamte Länge der Transferleitung verläuft.

Innerstes Element einer erfindungsgemäßen Transferleitung bildet somit die Prozessleitung 1, insbesondere ein Wellrohr, in dem das tiefkalte Fluid transportiert wird. Die Prozessleitung 1 ist von einem oder mehreren konzentrischen Wellschläuchen, nämlich Isolationshüllen 2, umgeben, die mit dem jeweils nächstinnerem Wellschlauch durch einen Isolationsraum 3 und optional MLI thermisch isoliert sind. Der Abstand zwischen den Schläuchen 1, 2 ist durch eine geeignete Vorrichtung gewährleistet, zum Beispiel durch Spacer, die beispielsweise in Längsrichtung der Transferleitung verlaufen können. Zusätzlich können Sorptionsmittel zur Verbesserung der Langzeitstabilität des Vakuums in den Isolationsraum 3 eingebracht sein. Die Enden der Transferleitung sind mit entsprechenden Fittings bzw. Anschlüssen, insbesondere den Kuppelelementen 6, abgeschlossen.

Die Prozessleitung wird zum Schutz und zur Führung innerhalb eines außenliegenden Hüllrohres, nämlich der Schutzhülle 4, beispielsweise zwischen zwei Tanks geführt, wie in Fig. 4 dargestellt. Dieses Hüllrohr 4 dient vornehmlich dem Schutz gegen Steinschläge, Witterung und Korrosion, aber sichert die Vakuumleitung auch gegen ein Berühren und die damit verbundenen Risiken durch die sehr tiefen Temperaturen ab. Das außenliegende Hüllrohr, Schutzhülle 4, wird zudem für eine sichere Montage sowie als dämpfendes Element verwendet. Die Dämpfung kommt durch eine direkte Verpressung der Vakuumleitung 1, 2, die mit Kunststoff ummantelt sein kann, gegen das außenliegende Wellrohr zustande und verhindert eine Beschädigung durch eine Modulation von Frequenz und Minimierung der Schwingungsamplituden.

Die Schutzhülle 4 umfasst zumindest zwei axial gegeneinander bewegbare Hüllenteile 4.1, 4.2, wobei die Hüllenteile 4.1, 4.2 durch einen Faltenbalg 5 miteinander verbunden sind und radial geschachtelt sind, so dass ein Hüllenteil 4.1 in einem Überlappungsabschnitt radial innerhalb oder außerhalb des anderen Hüllenteils 4.2 axial verschiebbar ist.

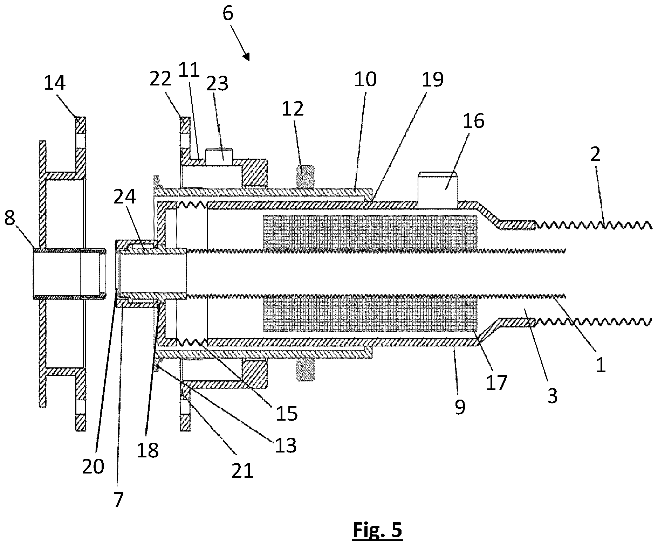

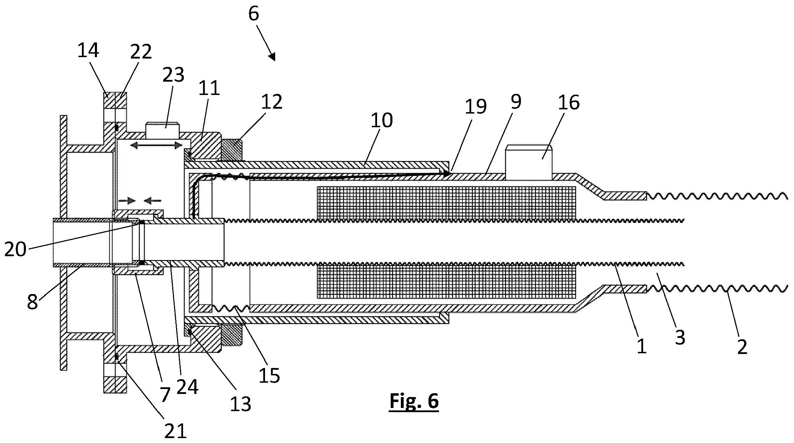

Zumindest an einem Ende, in der in Fig. 3 und Fig. 4 dargestellten Ausführung an beiden Enden, weist die Transferleitung Kuppelelemente 6 auf, die in Fig. 5 und Fig. 6 genauer dargestellt sind.

Ein Kuppelelement 5 umfasst folgende Teile (siehe Fig. 5): Die Isolationshülle 2 geht über in ein mechanisch festes Endstück 9, beispielsweise durch Befestigung. Die Prozessleitung 1 hat ebenfalls eine feste Hülse an deren Ende, nämlich die Endhülse 24, die mit dem Endstück 9 an einer Schweißstelle 18 des Endstücks, Schweißstelle-Endstück genannt, verschweißt ist.

Das Kuppelelement 6 ermöglicht eine Erhöhung des thermischen Leitungswiderstandes bei kompakter Bauweise des Endstücks der Transferleitung. Die Prozessleitung 1 und die Isolationshülle 2 sind im Endstück, nämlich Kuppelelement 6, dicht verschweißt, wie zuvor beschrieben, und diese Schweißstelle 18 stellt eine gute thermische Verbindung dar. Zur Verringerung des Wärmeeintrags in die tiefkalte Flüssigkeit entlang der Isolationshülle 2 des Endstücks und zur Vermeidung von Temperaturen unter dem Verflüssigungspunkt von Sauerstoff an der Isolationshülle 2 des Endstücks wird der thermische Widerstand gegen Wärmeleitung in der Isolationshülle 2 des Endstücks Kuppelelement 6 erhöht. Bei vorgegebenem Material, zum Beispiel Stahl, kann durch diese Geometrieadaption, insbesondere durch einen kleinen Querschnitt und langen Leitungspfad, der Widerstand erhöht werden (der Wärmeübertragungsweg ist in Fig. 6 als Pfeil eingezeichnet):
- Ein bevorzugt dünnwandige Faltenbalg 15 bildet einen Abschnitt des Endstücks 9 aus und erhöht den Wärmewiderstand durch die Verlängerung des Leitungspfades aufgrund der Wellenform.
- Eine Anschlusshülse 10 erhöht den Wärmewiderstand durch die Verlängerung des Leitungspfades aufgrund der in Richtung Vakuumstutzen 16 versetzten Schweißverbindung 19 mit dem Endstück 9.

Im Folgenden wird die Montage des Kuppelelements und der Ausgleich von Montagetoleranzen zur Gewährleistung der benötigten Anpresskräfte der Dichtungen beschrieben - siehe hierzu v.a. Fig. 6.

Die Prozessleitung 1 und die Isolationshülle 2 müssen dicht mit dem Tank/Dewar umfassend die Tankprozessleitung 8 und den Anschlussflansch 14 verbunden werden. Zunächst werden die beiden Prozessleitungen 8, 1 stumpf mit einer Überwurfmutter 7 verbunden. Durch Anziehen der Überwurfmutter 7 wird eine Dichtung Prozessleitung 20 stirnseitig zwischen den Rohrenden gepresst. Der Zugang zur Montage der Prozessleitung 1 wird durch das Zurückschieben einer Schiebemuffe 11 ermöglicht, die auf der Anschlusshülse 10 gleitet. Nach Verbindung der Prozessleitungen 1, 8 wird die Schiebemuffe 11 mit einer Mutter 12 gegen die Dichtfläche 13 an der Anschlusshülse 10, insbesondere an einem Anschlag der Anschlusshülse 10, fixiert, wobei ein Flansch der Schiebemuffe 11 gegen den Anschlussflansch 14 des Tanks/Dewars gepresst und damit die Transferleitung vom Tank/Dewar gedrückt wird. Die entgegengesetzten Kräfte sind in Fig. 6 als Pfeile dargestellt. Dies hat zur Folge, dass die (benötigten) Anpresskräfte der Dichtung Prozessleitung 20 zwischen den Prozessleitungen 1, 8 und/oder der Dichtungen Dichtung Anschlusshülse 13, zwischen Anschlusshülse 10 und Schiebemuffe 11 und Dichtung Anschlussflansch 21, zwischen der Schiebemuffe 11, bzw. genauer der Flanschfläche 22 der Schiebemuffe 11, und dem Anschlussflansch 14 des Tanks/Dewars verringert und die Dichtwirkung reduziert wird. Der Faltenbalg 15 im Endstück 9 kompensiert diesen Anpresskraftverlust teilweise. Die Position des Faltenbalgs 15 im Endstück 9 verringert dessen Belastung mit Torsions- und Biegemomenten.

Somit dient die Anschlusshülse 10 zur Erhöhung des thermischen Widerstands trotz kompakter Bauweise, der Faltenbalg 15 zur Erhöhung des thermischen Widerstands trotz kompakter Bauweise, zum Ausgleich von Montagetoleranzen und zur Gewährleistung von ausreichender Anpresskraft für die Dichtwirkung und die Schiebemuffe 11 ermöglicht den Zugang zu den Prozessleitungen 1, 8 und bildet einen Anschluss, nämlich an einem Vakuumstutzen-Kupplungsraum 23, zur Evakuierung/Inertisierung des Kupplungsraums.

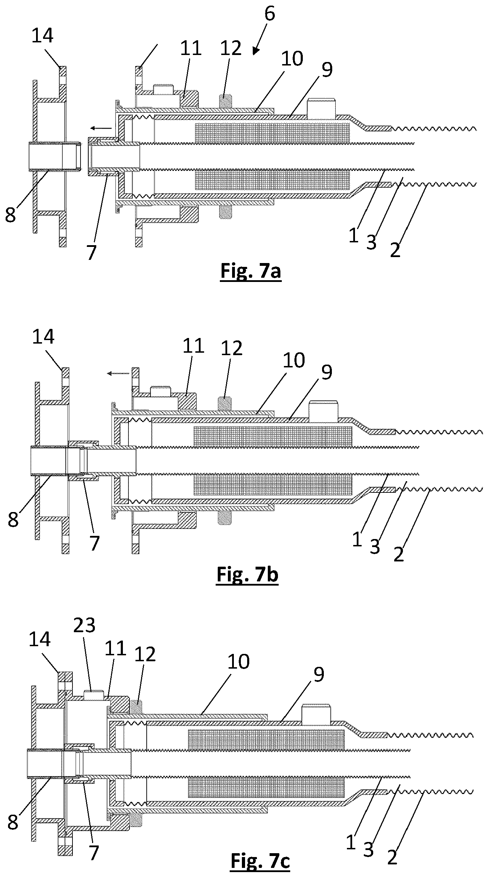

Die Fig. 7a, 7b, 7c zeigen Schritte beim Schließen des Kuppelelements 6 an einen Tank und die dabei mögliche schnelle und einfache Inertisierung des Kupplungsraums.

Dabei zeigt Fig. 7a wie das Kuppelelement 6 an den Tank angenähert wird, um die Prozessleitung 1 mit der Tankprozessleitung 8 zu verbinden (in Pfeilrichtung). In Fig. 7b ist bereits die Überwurfmutter 7 um die Prozessleitungen 1, 8 geschlossen und die Schiebemuffe 11 wird in Richtung zum Tank verschoben (Pfeil) und mittels der Mutter 12 an den Anschlussflansch 14 geschlossen. Fig. 7c zeigt das angeschlossene Kuppelelement 6 mit geschlossener Überwurfmutter 7 und Mutter 12, so dass durch den Vakuumstutzen-Kupplungsraum 23 ein Inertisieren oder Evakuieren des Kupplungsraums erfolgen kann. Nach Schließen der Kupplung kann somit über den Vakuumstutzen-Kupplungsraum 23 an der Schiebemuffe 11 der relativ kleine, von Transferleitung und Tank getrennte Kupplungsraum schnell und einfach mit einem trägen Gas mit ausreichend hohem Verfestigungspunkt inertisiert werden oder evakuiert werden.

### Bezugszeichenliste

- 1: Prozessleitung
- 2: Isolationshülle
- 3: Isolationsraum
- 4: Schutzhülle
- 4.1, 4.2: Hüllenteil
- 5: Faltenbalg
- 6: Kuppelelement
- 7: Überwurfmutter
- 8: Tankprozessleitung
- 9: Endstück
- 10: Anschlusshülse
- 11: Schiebemuffe
- 12: Mutter
- 13: Anschlag der Anschlusshülse, Dichtung der Anschlusshülse
- 14: Anschlussflansch
- 15: Faltenbalg
- 16: Vakuumstutzen
- 17: Sorptionsmaterial
- 18: Schweißstelle-Endstück
- 19: Schweißstelle-Anschlusshülse
- 20: Dichtung Prozessleitung
- 21: Dichtung Anschlussflansch
- 22: Flanschfläche
- 23: Vakuumstutzen-Kupplungsraum
- 24: Endhülse

## Patentansprüche

1. Thermisch isolierte Transferleitung für ein tiefkaltes Fluid, umfassend eine Prozessleitung (1) zur Führung des Fluids, eine radial außerhalb der Prozessleitung (1) liegende, entlang der Längsrichtung der Prozessleitung (1) verlaufende Isolationshülle (2), wobei zwischen der Prozessleitung (1) und der Isolationshülle (2) ein Isolationsraum (3), beispielsweise ein Vakuumraum, eingerichtet ist, wobei ein Kuppelelement (6) zur Anbindung der Transferleitung an einen kryogenen Tank an zumindest einem Ende der Transferleitung ausgebildet ist, bevorzugt an beiden Enden, wobei das Kuppelelement (6) dazu eingerichtet ist, dass die Prozessleitung (1) der Transferleitung an einer Tankprozessleitung (8) des kryogenen Tanks befestigbar ist, so dass eine fluidleitende Verbindung zwischen der Prozessleitung (1) und der Tankprozessleitung (8) herstellbar ist, wobei das Kuppelelement (6) ein Endstück (9) umfasst, wobei die Isolationshülle (2) der Transferleitung in das Endstück (9) übergeht, wobei das Kuppelelement (6) eine Anschlusshülse (10) umfasst, wobei die Anschlusshülse (10) konzentrisch radial außen am Endstück (9) angeordnet ist und am Endstück (9) befestigt ist, nämlich verschweißt, wobei eine Schiebemuffe (11) vorgesehen ist, die dazu eingerichtet ist, die Anschlusshülse (10) mit dem kryogenen Tank zu verbinden,
wobei das Endstück (9) in einem axialen Abschnitt, in dem das Endstück (9) von der Anschlusshülse (10) umgeben ist, zumindest abschnittsweise durch einen Faltenbalg (15) gebildet ist, wobei die Anschlusshülse (10) mit dem Endstück (9) über eine Schweißstelle (19) der Anschlusshülse (10) verschweißt ist, wobei die Schweißstelle (19) der Anschlusshülse (10) in der Nähe des der Isolationshülle (2) zugewandten Endes der Anschlusshülse (10) ausgebildet ist, wobei die Schweißstelle (19) der Anschlusshülse (10) axial zwischen dem Faltenbalg (15) und der Isolationshülle (2) am Endstück (9) ausgebildet ist.

2. Thermisch isolierte Transferleitung nach zumindest einem der vorhergehenden Ansprüche,
**dadurch gekennzeichnet, dass** das Kuppelelement eine Endhülse (24) umfasst, die mit der Prozessleitung (1) fluidverbunden ist, wobei das Kuppelelement (6) mittels Endhülse (24) dazu eingerichtet ist, dass die Prozessleitung (1) der Transferleitung an Tankprozessleitung (8) des kryogenen Tanks befestigt wird, so dass eine fluidleitende Verbindung zwischen der Prozessleitung (1) und der Tankprozessleitung (8) hergestellt wird.

3. Thermisch isolierte Transferleitung zumindest einem der vorhergehenden Ansprüche,
**dadurch gekennzeichnet, dass** das Kuppelelement (6) eine Überwurfmutter (7) umfasst, die dazu eingerichtet ist, dass die Prozessleitung (1) der Transferleitung an der Tankprozessleitung (8) befestigt wird, so dass eine fluidleitende Verbindung zwischen der Prozessleitung (1) und der Tankprozessleitung (8) hergestellt wird.

4. Thermisch isolierte Transferleitung nach zumindest einem der vorhergehenden Ansprüche,
**dadurch gekennzeichnet, dass** die Schiebemuffe (11) konzentrisch radial außen am Endstück (9) und/oder an der Anschlusshülse (10) angeordnet ist und gegenüber dem Endstück (9) und/oder der Anschlusshülse (10) axial verschiebbar ist.

5. Thermisch isolierte Transferleitung nach zumindest einem der vorhergehenden Ansprüche,
**dadurch gekennzeichnet, dass** eine Mutter (12) konzentrisch radial außen an der Anschlusshülse (10) angeordnet ist und dazu eingerichtet ist, die Schiebemuffe (11) axial gegen einen Anschlag (13) der Anschlusshülse (10) und/oder axial gegen einen Anschlussflansch (14) des kryogenen Tanks zu drücken.

6. Thermisch isolierte Transferleitung nach zumindest einem der vorhergehenden Ansprüche,
**dadurch gekennzeichnet, dass** das Endstück (9) einen Vakuumstutzen (16) aufweist, wobei durch den Vakuumstutzen (16) ein Vakuum im Isolationsraum (3) herstellbar ist oder der Isolationsraum (3) mit einem Inertgas geflutet werden kann, und/oder dass innerhalb des Endstücks (9) ein Sorptionsmaterial (17) angeordnet ist, insbesondere Zeolith, Aktivkohle und/oder Getter, zum Beispiel Barium.

7. Thermisch isolierte Transferleitung nach zumindest einem der vorhergehenden Ansprüche,
**dadurch gekennzeichnet, dass** die Prozessleitung (1) und die Isolationshülle (2) gemeinsam, zumindest abschnittsweise entlang ihrer Erstreckung in Längsrichtung der Transferleitung, eine U-Form oder V-Form oder Mäanderform oder Spiralform aufweisen.

8. Thermisch isolierte Transferleitung nach zumindest einem der vorhergehenden Ansprüche,
**dadurch gekennzeichnet, dass** die Prozessleitung (1) zumindest abschnittsweise ein Wellrohr oder Wellschlauch ist und/oder die Isolationshülle (2) zumindest abschnittsweise ein Wellrohr oder Wellschlauch ist.

9. Thermisch isolierte Transferleitung nach zumindest einem der vorhergehenden Ansprüche,
**dadurch gekennzeichnet, dass** die Prozessleitung (1) und die Isolationshülle (2) gemeinsam, über im Wesentlichen die gesamte Erstreckung in Längsrichtung der Transferleitung, eine U-Form oder V-Form oder Mäanderform oder Spiralform aufweisen oder über zumindest 40%, bevorzugt zumindest 60 %, besonders bevorzugt zumindest 80% der Erstreckung in Längsrichtung der Transferleitung eine U-Form oder V-Form oder Mäanderform oder Spiralform aufweisen.

10. Thermisch isolierte Transferleitung nach zumindest einem der vorhergehenden Ansprüche,
**dadurch gekennzeichnet, dass** die Prozessleitung (1) und die Isolationshülle (2) konzentrisch zueinander angeordnet sind, wobei die Konzentrizität auch entlang derjenigen Abschnitte entlang der Erstreckung der Transferleitung in Längsrichtung besteht, die eine U-Form oder V-Form oder Mäanderform oder Spiralform aufweisen.

11. Thermisch isolierte Transferleitung nach zumindest einem der vorhergehenden Ansprüche,
**dadurch gekennzeichnet, dass** zwischen der Prozessleitung (1) und der Isolationshülle (2) Abstandshalter eingerichtet sind, um einen Abstand zwischen Prozessleitung (1) und Isolationshülle (2) sicherzustellen, auch entlang derjenigen Abschnitte entlang der Erstreckung der Transferleitung in Längsrichtung, die eine U-Form oder V-Form oder Mäanderform oder Spiralform aufweisen.

12. Thermisch isolierte Transferleitung nach zumindest einem der vorhergehenden Ansprüche,
**dadurch gekennzeichnet, dass** im Isolationsraum (3) ein Vakuum und/oder eine Feststoffisolation, und/oder ein Inertgas, zum Beispiel CO₂, und/oder eine thermisch reflektive Schicht, zum Beispiel eine Multilayer Insulation (MLI), eingerichtet ist.

13. Thermisch isolierte Transferleitung nach zumindest einem der vorhergehenden Ansprüche,
**dadurch gekennzeichnet, dass** im Isolationsraum (3) abschnittsweise ein Sorptionsmittel angeordnet ist, insbesondere Zeolith, Aktivkohle und/oder Getter, zum Beispiel Barium.

14. Thermisch isolierte Transferleitung nach zumindest einem der vorhergehenden Ansprüche,
**dadurch gekennzeichnet, dass** eine Schutzhülle (4) entlang der Erstreckung der Isolationshülle (2) radial außerhalb der Isolationshülle (2) verläuft, wobei die Schutzhülle (4) bevorzugt nicht die Form der Isolationshülle (2) aufweist, wobei die Schutzhülle (4) besonders bevorzugt eine Zylindermantelform aufweist.

15. Thermisch isolierte Transferleitung nach Anspruch 14,
**dadurch gekennzeichnet, dass** zwischen der Schutzhülle (4) und der Isolationshülle (2) zumindest abschnittsweise ein Dämpfungsmaterial und/oder ein elastisches Material angeordnet ist.

16. Thermisch isolierte Transferleitung nach Anspruch 14 oder 15, **dadurch gekennzeichnet, dass** die Schutzhülle (4) zumindest zwei axial gegeneinander bewegbare Hüllenteile (4.1, 4.2) umfasst, wobei die Hüllenteile (4.1, 4.2) bevorzugt durch einen Faltenbalg (5) und/oder eine Tülle und/oder eine Hülse miteinander verbunden sind und/oder radial geschachtelt sind, so dass ein Hüllenteil (4.1) in einem Überlappungsabschnitt radial innerhalb oder außerhalb des anderen Hüllenteils (4.2) verschiebbar ist.

## Claims

1. Thermally insulated transfer line for a deep-cooled fluid, comprising a process line (1) for conduction of the fluid, an insulation envelope (2) lying radially outside the process line (1) and running in the longitudinal direction of the process line (1), wherein an insulation space (3), for example a vacuum space, is formed between the process line (1) and the insulation envelope (2), wherein a coupling element (6) is provided at least at one end of the transfer line, preferably at both ends, for connecting the transfer line to a cryogenic tank, wherein the coupling element (6) is configured such that the process line (1) of the transfer line can be attached to a tank process line (8) of the cryogenic tank such that a fluid-conductive connection can be created between the process line (1) and the tank process line (8), wherein the coupling element (6) comprises an end piece (9), wherein the insulation envelope (2) of the transfer line transforms into the end piece (9),
wherein the coupling element (6) comprises a connecting sleeve (10), wherein the connecting sleeve (10) is arranged concentrically to and radially on the outside of the end piece (9), and is attached, namely welded, to the end piece (9), wherein a sliding coupling sleeve (11) is provided, which is configured to connect the connecting sleeve (10) to the cryogenic tank,
wherein the end piece (9), in an axial portion in which the end piece (9) is surrounded by the connecting sleeve (10), is at least partially formed by a bellows (15) wherein
the connecting sleeve (10) is welded to the end piece (9) via a weld point (19)of the connecting sleeve (10), wherein the weld point (19) of the connecting sleeve is formed in the vicinity of the end of the connecting sleeve (10) facing the insulation envelope (2), wherein the weld point(19) of the connecting sleeve is formed on the end piece (9) axially between the bellows (15) and the insulation envelope (2).

2. Thermally insulated transfer line according to at least one of the preceding claims,
**characterized in that** the coupling element comprises an end sleeve (24) which is fluidically connected to the process line (1), wherein the coupling element (6) is configured by means of an end sleeve (24) such that the process line (1) of the transfer line is attached to the tank process line (8) of the cryogenic tank, such that a fluid-conductive connection is created between the process line (1) and the tank process line (8).

3. Thermally insulated transfer line according to at least one of the preceding claims,
**characterized in that** the coupling element (6) comprises a union nut (7) which is configured such that the process line (1) of the transfer line is attached to the tank process line (8) such that a fluid-conductive connection is created between the process line (1) and the tank process line (8).

4. Thermally insulated transfer line according to at least one of the preceding claims,
**characterized in that** the sliding coupling sleeve (11) is arranged concentrically radially on the outside of the end piece (9) and/or the connecting sleeve (10) and is axially movable relative to the end piece (9) and/or the connecting sleeve (10).

5. Thermally insulated transfer line according to at least one of the preceding claims,
**characterized in that** a nut (12) is arranged concentrically radially on the outside of the connecting sleeve (10) and is configured to push the sliding coupling sleeve (11) axially against a stop (13) of the connecting sleeve (10) and/or axially against a connecting flange (14) of the cryogenic tank.

6. Thermally insulated transfer line according to at least one of the preceding claims,
**characterized in that** the end piece (9) comprises a vacuum connector (16), wherein via the vacuum connector (16), a vacuum can be created in the insulation space (3) or the insulation space (3) can be flooded with an inert gas, and/or that inside the end piece (9), an absorbent material (17) is arranged, in particular zeolith, active charcoal and/or getter, for example barium.

7. Thermally insulated transfer line according to at least one of the preceding claims,
**characterized in that** the process line (1) and the insulation envelope (2) together, at least in portions along their extent in the longitudinal direction of the transfer line, have a U-shape or a V-shape or a meandering form or a helical form.

8. Thermally insulated transfer line according to at least one of the preceding claims,
**characterized in that** the process line (1) at least in portions is a corrugated tube or corrugated hose, and/or the insulation envelope (2) at least in portions is a corrugated tube or corrugated hose.

9. Thermally insulated transfer line according to at least one of the preceding claims,
**characterized in that** the process line (1) and the insulation envelope (2) together, at least substantially over the entire extent in the longitudinal direction of the transfer line, have a U-shape or a V-shape or a meandering form or a helical form, or over at least 40%, preferably at least 60%, particularly preferably at least 80% of the extent in the longitudinal direction of the transfer line, have a U-shape or a V-shape or a meandering form or a helical form.

10. Thermally insulated transfer line according to at least one of the preceding claims,
**characterized in that** the process line (1) and the insulation envelope (2) are arranged concentrically to one another, wherein the concentricity exists also along the portions along the extent of the transfer line in the longitudinal direction which have a U-shape or V-shape or meandering form or helical form.

11. Thermally insulated transfer line according to at least one of the preceding claims,
**characterized in that** spacers are provided between the process line (1) and the insulation envelope (2) for ensuring a distance between the process line (1) and the insulation envelope (2), also along the portions along the extent of the transfer line in the longitudinal direction which have a U-shape or V-shape or meandering form or helical form.

12. Thermally insulated transfer line according to at least one of the preceding claims,
**characterized in that** in the insulation space (3), a vacuum and/or a solid insulation, and/or an inert gas such as CO₂, and/or a thermally reflective layer, for example a Multilayer Insulation (MLI), is provided.

13. Thermally insulated transfer line according to at least one of the preceding claims,
**characterized in that** in the insulation space (3), in portions an absorbent material (17) is arranged, in particular zeolith, active charcoal and/or getter, for example barium.

14. Thermally insulated transfer line according to at least one of the preceding claims,
**characterized in that** a protective envelope (4) runs along the extent of the insulation envelope (2), radially outside the insulation envelope (2), wherein preferably the protective envelope (4) does not follow the form of the insulation envelope (2), wherein the protective envelope (4) particularly preferably has a cylinder casing form.

15. Thermally insulated transfer line according to Claim 14,
**characterized in that** a damping material and/or an elastic material is arranged between the protective envelope (4) and the insulation envelope (2), at least in portions.

16. Thermally insulated transfer line according to Claim 14 or 15, **characterized in that** the protective envelope (4) comprises at least two envelope parts (4.1, 4.2) which are movable axially relative to one another, wherein the envelope parts (4.1, 4.2) are preferably connected together by a bellows (5) and/or a bush and/or a sleeve, and/or are radially nested so that one envelope part (4.1) can slide radially inside or outside the other envelope part (4.2) in an overlap portion.

## Revendications

1. Conduit de transfert thermiquement isolé pour un fluide cryogénique, comprenant un conduit de processus (1) pour le guidage du fluide, une gaine d'isolation (2) située radialement à l'extérieur du conduit de processus (1), s'étendant le long de la direction longitudinale du conduit de processus (1), un espace d'isolation (3), par exemple un espace sous vide, étant installé entre le conduit de processus (1) et la gaine d'isolation (2), un élément d'accouplement (6) pour le rattachement du conduit de transfert à un réservoir cryogénique étant réalisé à au moins une extrémité du conduit de transfert, de préférence aux deux extrémités, l'élément d'accouplement (6) étant adapté pour que le conduit de processus (1) du conduit de transfert puisse être fixé à un conduit de processus de réservoir (8) du réservoir cryogénique, de telle sorte qu'une liaison de conduction de fluide peut être établie entre le conduit de processus (1) et le conduit de processus de réservoir (8), l'élément d'accouplement (6) comprenant une pièce d'extrémité (9), la gaine d'isolation (2) du conduit de transfert se prolongeant dans la pièce d'extrémité (9), l'élément d'accouplement (6) comprenant une douille de raccordement (10), la douille de raccordement (10) étant agencée de manière concentrique radialement à l'extérieur sur la pièce d'extrémité (9) et étant fixée à la pièce d'extrémité (9), à savoir soudée, un manchon coulissant (11) étant prévu, lequel est adapté pour relier la douille de raccordement (10) au réservoir cryogénique,
la pièce d'extrémité (9) étant formée au moins par sections par un soufflet (15) dans une section axiale dans laquelle la pièce d'extrémité (9) est entourée par la douille de raccordement (10), la douille de raccordement (10) étant soudée à la pièce d'extrémité (9) par l'intermédiaire d'un point de soudure (19) de la douille de raccordement (10), le point de soudure (19) de la douille de raccordement (10) étant réalisé à proximité de l'extrémité de la douille de raccordement (10) tournée vers la gaine d'isolation (2), le point de soudure (19) de la douille de raccordement (10) étant réalisé axialement entre le soufflet (15) et la gaine d'isolation (2) sur la pièce d'extrémité (9).

2. Conduit de transfert thermiquement isolé selon au moins l'une quelconque des revendications précédentes, **caractérisé en ce que** l'élément d'accouplement comprend un manchon d'extrémité (24) qui est en communication fluidique avec le conduit de processus (1), l'élément d'accouplement (6) étant adapté, au moyen du manchon d'extrémité (24), pour que le conduit de processus (1) du conduit de transfert soit fixé au conduit de processus de réservoir (8) du réservoir cryogénique, de telle sorte qu'une liaison de conduction de fluide est établie entre le conduit de processus (1) et le conduit de processus de réservoir (8).

3. Conduit de transfert thermiquement isolé selon au moins l'une quelconque des revendications précédentes, **caractérisé en ce que** l'élément d'accouplement (6) comprend un écrou à chapeau (7) qui est adapté pour fixer le conduit de processus (1) du conduit de transfert au conduit de processus de réservoir (8) de telle sorte qu'une liaison de conduction de fluide est établie entre le conduit de processus (1) et le conduit de processus de réservoir (8).

4. Conduit de transfert thermiquement isolé selon au moins l'une quelconque des revendications précédentes, **caractérisé en ce que** le manchon coulissant (11) est agencé de manière concentrique radialement à l'extérieur sur la pièce d'extrémité (9) et/ou sur la douille de raccordement (10) et peut être déplacé axialement par rapport à la pièce d'extrémité (9) et/ou à la douille de raccordement (10).

5. Conduit de transfert thermiquement isolé selon au moins l'une quelconque des revendications précédentes, **caractérisé en ce qu'**un écrou (12) est agencé de manière concentrique radialement à l'extérieur sur la douille de raccordement (10) et est adapté pour pousser le manchon coulissant (11) axialement contre une butée (13) de la douille de raccordement (10) et/ou axialement contre une bride de raccordement (14) du réservoir cryogénique.

6. Conduit de transfert thermiquement isolé selon au moins l'une quelconque des revendications précédentes, **caractérisé en ce que** la pièce d'extrémité (9) présente une tubulure à vide (16), la tubulure à vide (16) permettant d'établir un vide dans l'espace d'isolation (3) ou d'inonder l'espace d'isolation (3) avec un gaz inerte, et/ou un matériau de sorption (17) est agencé à l'intérieur de la pièce d'extrémité (9), notamment une zéolithe, du charbon actif et/ou un getter, par exemple du baryum.

7. Conduit de transfert thermiquement isolé selon au moins l'une quelconque des revendications précédentes, **caractérisé en ce que** le conduit de processus (1) et la gaine d'isolation (2) présentent ensemble, au moins par sections le long de leur extension dans la direction longitudinale du conduit de transfert, une forme en U ou une forme en V ou une forme en méandres ou une forme en spirale.

8. Conduit de transfert thermiquement isolé selon au moins l'une quelconque des revendications précédentes, **caractérisé en ce que** le conduit de processus (1) est au moins par sections un tube ondulé ou un tuyau ondulé et/ou la gaine d'isolation (2) est au moins par sections un tube ondulé ou un tuyau ondulé.

9. Conduit de transfert thermiquement isolé selon au moins l'une quelconque des revendications précédentes, **caractérisé en ce que** le conduit de processus (1) et la gaine d'isolation (2) présentent ensemble, sur essentiellement toute l'extension dans la direction longitudinale du conduit de transfert, une forme en U ou une forme en V ou une forme en méandres ou une forme en spirale, ou présentent sur au moins 40 %, de préférence au moins 60 %, de manière particulièrement préférée au moins 80 % de l'extension dans la direction longitudinale du conduit de transfert, une forme en U ou une forme en V ou une forme en méandres ou une forme en spirale.

10. Conduit de transfert thermiquement isolé selon au moins l'une quelconque des revendications précédentes, **caractérisé en ce que** le conduit de processus (1) et la gaine d'isolation (2) sont agencés de manière concentrique l'un par rapport à l'autre, la concentricité existant également le long des sections le long de l'extension du conduit de transfert dans la direction longitudinale qui présentent une forme en U ou une forme en V ou une forme en méandres ou une forme en spirale.

11. Conduit de transfert thermiquement isolé selon au moins l'une quelconque des revendications précédentes, **caractérisé en ce que** des entretoises sont installées entre le conduit de processus (1) et la gaine d'isolation (2) pour assurer un espacement entre le conduit de processus (1) et la gaine d'isolation (2), même le long des sections le long de l'extension du conduit de transfert dans la direction longitudinale qui présentent une forme en U ou une forme en V ou une forme en méandres ou une forme en spirale.

12. Conduit de transfert thermiquement isolé selon au moins l'une quelconque des revendications précédentes, **caractérisé en ce qu'**il est installé dans l'espace d'isolation (3) un vide et/ou une isolation solide, et/ou un gaz inerte, par exemple du CO₂, et/ou une couche thermiquement réfléchissante, par exemple une isolation multicouche (MLI).

13. Conduit de transfert thermiquement isolé selon au moins l'une quelconque des revendications précédentes, **caractérisé en ce qu'**un agent de sorption est agencé par sections dans l'espace d'isolation (3), notamment une zéolithe, du charbon actif et/ou un getter, par exemple du baryum.

14. Conduit de transfert thermiquement isolé selon au moins l'une quelconque des revendications précédentes, **caractérisé en ce qu'**une gaine de protection (4) s'étend le long de l'extension de la gaine d'isolation (2) radialement à l'extérieur de la gaine d'isolation (2), la gaine de protection (4) ne présentant de préférence pas la forme de la gaine d'isolation (2), la gaine de protection (4) présentant de manière particulièrement préférée une forme d'enveloppe cylindrique.

15. Conduit de transfert thermiquement isolé selon la revendication 14, **caractérisé en ce qu'**un matériau d'amortissement et/ou un matériau élastique est agencé au moins par sections entre la gaine de protection (4) et la gaine d'isolation (2).

16. Conduit de transfert thermiquement isolé selon la revendication 14 ou 15, **caractérisé en ce que** la gaine de protection (4) comprend au moins deux parties de gaine (4.1, 4.2) mobiles axialement l'une par rapport à l'autre, les parties de gaine (4.1, 4.2) étant de préférence reliées entre elles par un soufflet (5) et/ou une douille et/ou un manchon et/ou étant imbriquées radialement, de telle sorte qu'une partie de gaine (4.1) peut être déplacée radialement à l'intérieur ou à l'extérieur de l'autre partie de gaine (4.2) dans une section de chevauchement.
